# EUROPEAN PATENT APPLICATION

(11) **EP 2 800 184 A1**
(43) Date of publication of application: **05.11.2014**
(21) Application number: 12861940.0
(22) Date of filing: 21.11.2012
(51) Int. Cl.: H01M 8/04, H01M 8/10

(54) **FUEL CELL SYSTEM**

(30) Priority: 28.12.2011 JP 2011288517
(71) Applicant: Nissan Motor Co., Ltd, Yokohama-shi, Kanagawa 221-0023 (JP)
(72) Inventor: IKEZOE, Keigo, Atsugi-shi Kanagawa 243-0123 (JP); CHIKUGO, Hayato, Atsugi-shi Kanagawa 243-0123 (JP); TOMITA, Yousuke, Atsugi-shi Kanagawa 243-0123 (JP); ICHIKAWA, Yasushi, Atsugi-shi Kanagawa 243-0123 (JP)
(74) Representative: Grünecker, Kinkeldey, Stockmair & Schwanhäusser
(86) International application number: PCT/JP2012/080139
(87) International publication number: WO 2013/099480

(57) **Abstract**

A fuel cell system configured to generate power by supplying anode gas and cathode gas to a fuel cell includes a control valve for controlling a pressure of the anode gas to be supplied to the fuel cell, a buffer unit configured to store anode off-gas to be discharged from the fuel cell, a purge valve configured to adjust a flow rate of the anode off-gas discharged from the buffer unit, a pulsating operation unit configured to increase and vary the pressure of the anode gas downstream of the control valve according to a load of the fuel cell, and a purge unit configured to control an opening of the purge valve according to the load of the fuel cell. The purge unit increases the opening of the purge valve controlled according to the load of the fuel cell during a down transient operation in which the load of the fuel cell decreases.

## Description

### TECHNICAL FIELD

This invention relates to a fuel cell system.

### BACKGROUND ART

JP2007-517369A discloses a conventional fuel cell system in which a normally closed solenoid valve is provided in an anode gas supply passage and a normally open solenoid valve and a buffer tank (recycle tank) are successively provided from an upstream side in an anode gas discharge passage.

This conventional fuel cell system is an anode gas non-circulation type fuel cell system which does not return unused anode gas discharged to the anode gas discharge passage to the anode gas supply passage, and the unused anode gas stored in the buffer tank is reused by being reversely flowed to a fuel cell stack by periodically opening and closing the normally close solenoid valve and the normally open solenoid valve.

### SUMMARY OF INVENTION

However, a problem that an anode gas concentration becomes locally lower in some part than in other parts in an anode gas flow passage in the fuel cell stack due to the reverse flow of anode off-gas from the buffer tank during a transient operation after a load applied to the fuel cell stack (hereinafter, referred to as a "stack load") decreases (hereinafter, referred to as a "down transient operation") has been found to occur in the above conventional fuel cell system.

The present invention was developed in view of such a problem and aims to suppress the generation of a part where an anode gas concentration becomes locally reduced in an anode gas flow passage during a down transient operation.

According to a certain aspect of the present invention, a fuel cell system configured to generate power by supplying anode gas and cathode gas to a fuel cell is provided which includes a control valve for controlling a pressure of the anode gas to be supplied to the fuel cell, a buffer unit configured to store anode off-gas to be discharged from the fuel cell, a purge valve configured to adjust a flow rate of the anode off-gas discharged from the buffer unit, a pulsating operation unit configured to increase and vary the pressure of the anode gas downstream of the control valve according to a load of the fuel cell, and a purge configured to control an opening of the purge valve according to the load of the fuel cell, wherein the purge unit increases the opening of the purge valve controlled according to the load of the fuel cell during a down transient operation in which the load of the fuel cell decreases.

Embodiments and advantages of the present invention are described in detail below with reference to the accompanying drawings.

### BRIEF DESCRIPTION OF DRAWINGS

FIG. 1 is a schematic perspective view of a fuel cell according to a first embodiment of the present invention,
FIG. 2 is a sectional view along II-II of the fuel cell of FIG. 1,
FIG. 3 is a schematic configuration diagram of an anode gas non-circulation type fuel cell system according to the first embodiment of the present invention,
FIGS. 4 are charts showing a pulsating operation during a steady operation in which an operating state of the fuel cell system is constant,
FIG. 5 is a flow chart showing a pulsating operation control according to the first embodiment of the present invention,
FIG. 6 is a flow chart showing a normal operation process according to the first embodiment of the present invention,
FIG. 7 is a table for calculating a normal target opening of a purge valve based on a stack load,
FIG. 8 is a flow chart showing a down transient operation process according to the first embodiment of the present invention,
FIG. 9 is a table for setting a down transient target opening of the purge valve based on the stack load,
FIGS. 10 are time charts showing the operation of the pulsating operation control according to the first embodiment of the present invention,
FIG. 11 is a graph showing an effect of the pulsating operation control according to the first embodiment of the present invention,
FIG. 12 is a flow chart showing a pulsating operation control according to a second embodiment of the present invention,

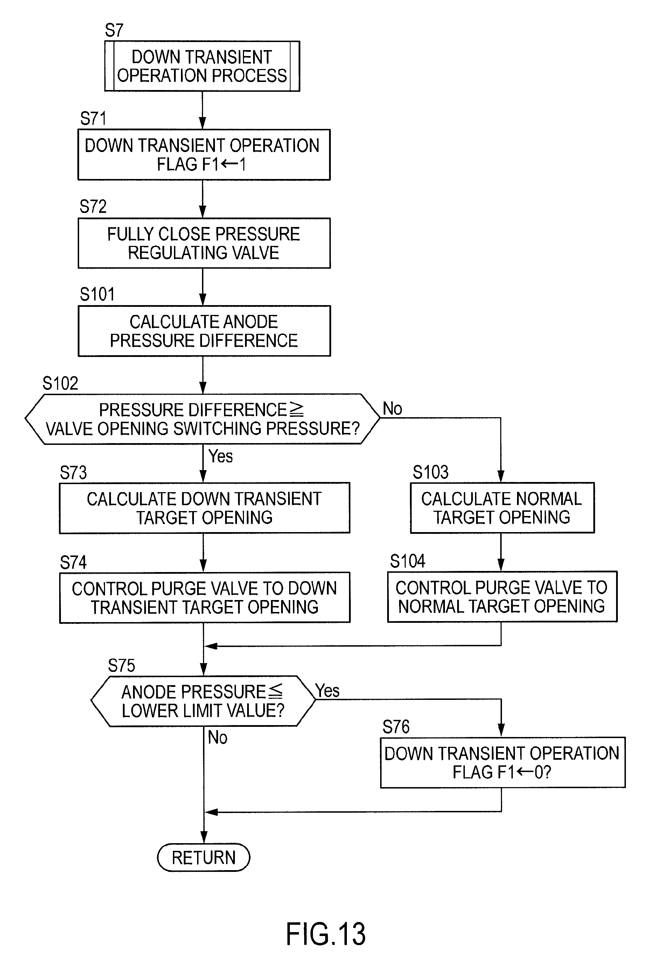

FIG. 13 is a flow chart showing a down transient operation process according to the second embodiment of the present invention,
FIGS. 14 are time charts showing the operation of the pulsating operation control according to the second embodiment of the present invention,
FIG. 15A is a graph comparing concentration distributions of anode gas in an anode gas flow passage after a down transient operation in the case of performing the down transient operation for the same time according to an anode gas concentration in a buffer tank before the down transient operation,
FIG. 15B is a graph comparing concentration distributions of the anode gas in the anode gas flow passage after the down transient operation in the case of performing the down transient operation for the same time according to the anode gas concentration in the buffer tank before the down transient operation,
FIG. 16 is a flow chart showing a down transient operation process according to a third embodiment of the present invention,
FIG. 17 is a graph showing a concentration distribution of anode gas in an anode gas flow passage immediately after a down transient operation is finished,
FIG. 18 is a graph showing a concentration distribution of the anode gas in the anode gas flow passage after a stagnation point exits from the anode gas flow passage,
FIG. 19 is a flow chart showing a down transient operation process according to a fourth embodiment of the present invention,
FIGS. 20 are time charts showing a change of an anode pressure when a pressure regulating valve is fully closed to decrease an anode pressure to a lower limit value during the down transient operation, and
FIGS. 21 are a diagram and a graph showing a reason for the generation of a part where an anode gas concentration becomes locally lower than in other parts in an anode gas flow passage.

### DESCRIPTION OF EMBODIMENTS

### (First Embodiment)

In a fuel cell, an electrolyte membrane is sandwiched between an anode electrode (fuel electrode) and a cathode electrode (oxidant electrode) and power is generated by supplying anode gas (fuel gas) containing hydrogen to the anode electrode and cathode gas (oxidant gas) containing oxygen to the cathode electrode. Electrode reactions which proceed in both the anode electrode and the cathode electrode are as follows.

Anode electrode: 2H₂→H⁺+4e⁻ (1)

Cathode electrode: 4H⁺+4e⁻+O₂→2H₂O (2)

The fuel cell generates an electromotive force of about 1 volt by these electrode reactions (1), (2).

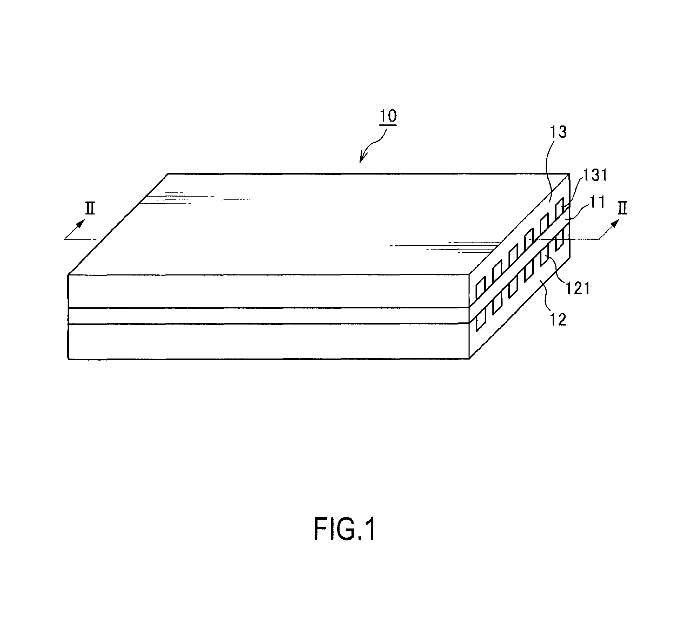

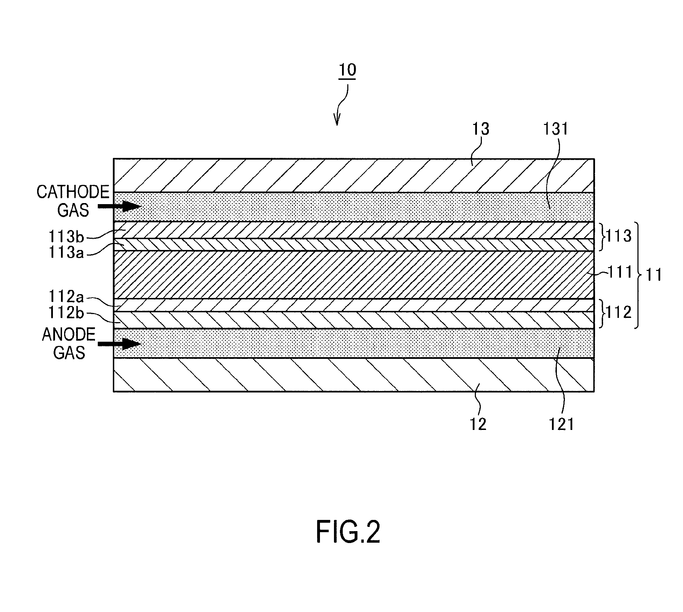

FIGS. 1 and 2 are views showing the configuration of a fuel cell 10 according to a first embodiment of the present invention. FIG. 1 is a schematic perspective view of the fuel cell 10. FIG. 2 is a sectional view along II-II of the fuel cell 10 of FIG. 1.

The fuel cell 10 is configured by arranging an anode separator 12 and a cathode separator 13 on both sides of a membrane electrode assembly (hereinafter, referred to as an "MEA") 11.

The MEA 11 includes an electrolyte membrane 111, an anode electrode 112 and a cathode electrode 113. The MEA 11 includes the anode electrode 112 on one surface of the electrolyte membrane 111 and the cathode electrode 113 on the other surface.

The electrolyte membrane 111 is a proton conductive ion exchange membrane formed of fluororesin. The electrolyte membrane 111 exhibits good electrical conductivity in a wet state.

The anode electrode 112 includes a catalyst layer 112a and a gas diffusion layer 112b. The catalyst layer 112a is in contact with the electrolyte membrane 111. The catalyst layer 112a is formed of platinum or carbon black particles carrying platinum or the like. The gas diffusion layer 112b is provided on the outer side (side opposite to the electrolyte membrane 111) of the catalyst layer 112a and in contact with the anode separator 12. The gas diffusion layer 112b is formed of a member having sufficient gas diffusion property and electrical conductivity, e.g. formed of carbon cloth woven of a thread made of carbon fiber.

Similarly to the anode electrode 112, the cathode electrode 113 includes a catalyst layer 113a and a gas diffusion layer 113b.

The anode separator 12 is in contact with the gas diffusion layer 112b. The anode separator 12 includes, on a side in contact with the gas diffusion layer 112b, a plurality of groove-like anode gas flow passages 121 for supplying anode gas to the anode electrode 112.

The cathode separator 13 is in contact with the gas diffusion layer 113b. The cathode separator 13 includes, on a side in contact with the gas diffusion layer 113b, a plurality of groove-like cathode gas flow passages 131 for supplying cathode gas to the cathode electrode 113.

The anode gas flowing in the anode gas flow passages 121 and the cathode gas flowing in the cathode gas flow passages 131 flow in the same direction in parallel with each other. These gases may flow in opposite directions in parallel with each other.

In the case of using such a fuel cell 10 as a power source for an automotive vehicle, a fuel cell stack in which several hundreds of fuel cells 10 are laminated is used since required power is large. Power for driving the vehicle is taken out by configuring a fuel cell system for supplying anode gas and cathode gas to the fuel cell stack.

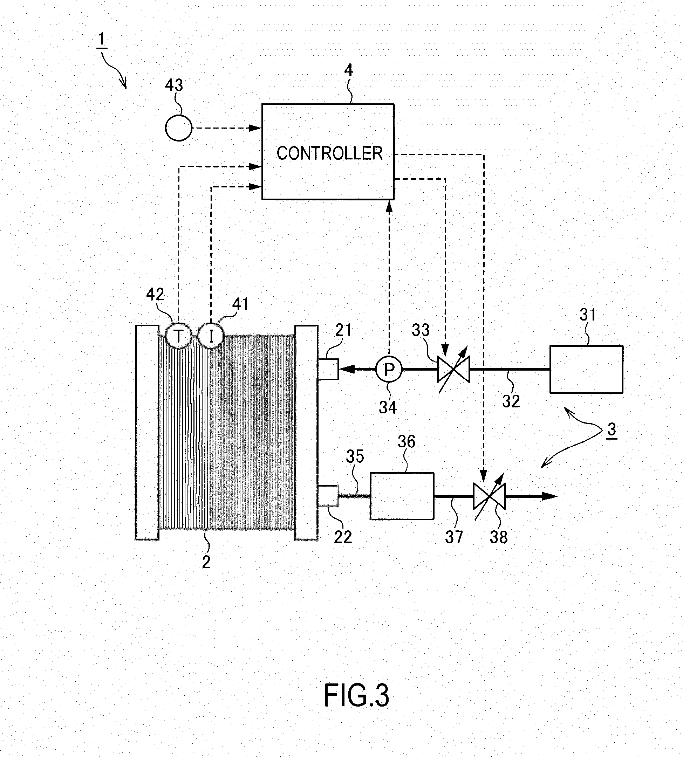

FIG. 3 is a schematic configuration diagram of an anode gas non-circulation type fuel cell system 1 according to the first embodiment of the present invention.

The fuel cell system 1 includes a fuel cell stack 2, an anode gas supplying device 3 and a controller 4.

The fuel cell stack 2 is formed by laminating a plurality of fuel cells 10 and generates power necessary to drive a vehicle (e.g. power necessary to drive a motor) upon receiving the supply of the anode gas and the cathode gas.

A cathode gas supplying/discharging device for supplying/ discharging the cathode gas to the fuel cell stack 2 and a cooling device for cooling the fuel cell stack 2 are not shown to facilitate the understanding since they are not principal parts of the present invention. In the present embodiment, air is used as the cathode gas.

The anode gas supplying device 3 includes a high-pressure tank 31, an anode gas supply passage 32, a pressure regulating valve 33, a pressure sensor 34, an anode gas discharge passage 35, a buffer tank 36, a purge passage 37 and a purge valve 38.

The high-pressure tank 31 stores the anode gas to be supplied to the fuel cell stack 2 in a high pressure state.

The anode gas supply passage 32 is a passage for supplying the anode gas discharged from the high-pressure tank 31 to the fuel cell stack 2, one end is connected to the high-pressure tank 31 and the other end is connected to an anode gas inlet hole 21 of the fuel cell stack 2.

The pressure regulating valve 33 is provided in the anode gas supply passage 32. The pressure regulating valve 33 supplies the anode gas discharged from the high-pressure tank 31 to the fuel cell stack 2 while adjusting the anode gas to a desired pressure. The pressure regulating valve 33 is an electromagnetic valve capable of adjusting an opening continuously or stepwise, and the opening thereof is controlled by the controller 4.

The pressure sensor 34 is provided downstream of the pressure regulating valve 33 in the anode gas supply passage 32. The pressure sensor 34 detects a pressure in a part of the anode gas supply passage 32 downstream of the pressure regulating valve 33. In the present embodiment, the pressure detected by this pressure sensor 34 is used as a pressure of the entire anode system (hereinafter, referred to as an "anode pressure") including each anode gas flow passage 121 in the fuel cell stack and the buffer tank 36.

One end of the anode gas discharge passage 35 is connected to an anode gas outlet hole 22 of the fuel cell stack 2 and the other end is connected to an upper part of the buffer tank 36. Mixture gas of excess anode gas which is not used in electrode reactions and inert gas such as nitrogen and water vapor cross-leaked from the cathode side to the anode gas flow passages 121 (hereinafter, referred to as "anode off-gas") is discharged to the anode gas discharge passage 35.

The buffer tank 36 temporarily stores the anode off-gas having flowed through the anode gas discharge passage 35. A part of water vapor in the anode off-gas is condensed into liquid water and separated from the anode off-gas in the buffer tank 36.

One end of the purge passage 37 is connected to a lower part of the buffer tank 36. The other end of the purge passage 37 is an opening end. The anode off-gas and liquid water accumulated in the buffer tank 36 are discharged to outside air from the opening end through the purge passage 37.

The purge valve 38 is provided in the purge passage 37. The purge valve 38 is an electromagnetic valve capable of adjusting an opening continuously or stepwise, and the opening thereof is controlled by the controller 4. By adjusting the opening of the purge valve 38, the amount of the anode off-gas discharged from the buffer tank 36 to the outside air via the purge passage 37 is adjusted, thereby adjusting an anode gas concentration in the buffer tank 36 to a desired concentration.

The controller 4 is configured by a microcomputer including a central processing unit (CPU), a read only memory (ROM), a random access memory (RAM) and an input/output interface (I/O interface).

To the controller 4 are input signals for detecting an operating state of the fuel cell system 1 such as those from a current sensor 41 for detecting an output current of the fuel cell stack 2, a temperature sensor 42 for detecting the temperature of cooling water for cooling the fuel cell stack 2 (hereinafter, referred to as a "stack temperature"), an accelerator stroke sensor 43 for detecting a depressed amount of an accelerator pedal (hereinafter, referred to as "accelerator operation amount") and the like in addition to the aforementioned pressure sensor 34.

The controller 4 performs a pulsating operation of periodically increasing and decreasing the anode pressure by periodically opening and closing the pressure regulating valve 33 based on these input signals and adjusts a flow rate of the anode off-gas discharged from the buffer tank 36 by adjusting the opening of the purge valve 38, thereby keeping the anode gas concentration in the buffer tank 36 at a desired concentration.

In the case of the anode gas non-circulation type fuel cell system 1, if the anode gas continues to be supplied from the high-pressure tank 31 to the fuel cell stack 2 with the pressure regulating valve 33 kept open, the anode off-gas including unused anode gas discharged from the fuel cell stack 2 continues to be discharged from the buffer tank 36 to the outside air via the purge passage 37, which is wasteful.

Accordingly, in the present embodiment, the pulsating operation of periodically increasing and decreasing the anode pressure is performed by periodically opening and closing the pressure regulating valve 33. By performing the pulsating operation, the anode off-gas accumulated in the buffer tank 36 can be reversely flowed to the fuel cell stack 2 when the anode pressure is decreased. Since this enables the reuse of the anode gas in the anode off-gas, the amount of the anode gas discharged to the outside air can be decreased and the waste of the anode gas can be eliminated.

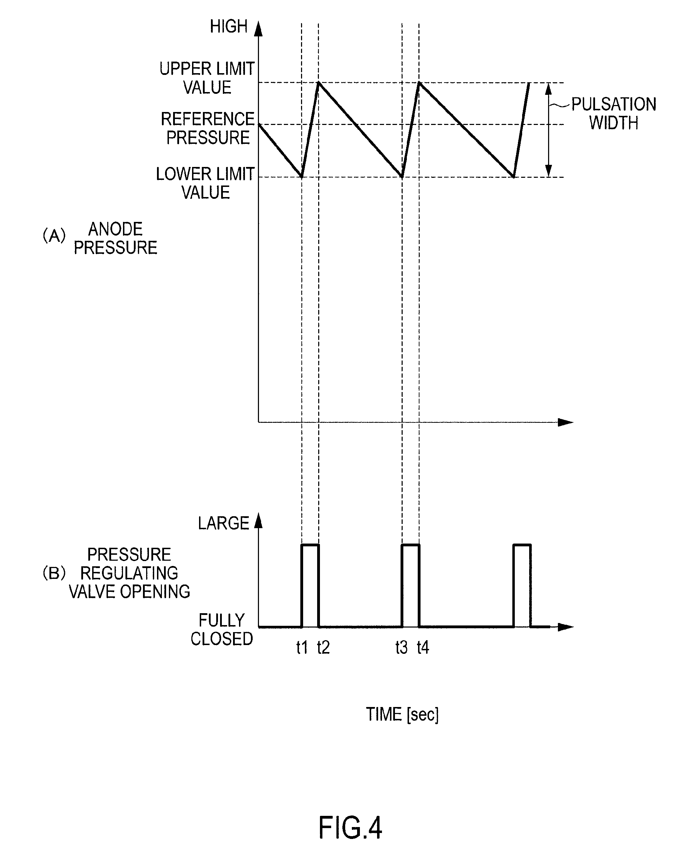

A reason why the anode off-gas accumulated in the buffer tank 36 is reversely flowed to the fuel cell stack 2 when the anode pressure is decreased is described below while the pulsating operation is described with reference to FIGS. 4.

FIGS. 4 are charts showing a pulsating operation during a steady operation in which an operating state of the fuel cell system 1 is constant.

As shown in FIG. 4(A), the controller 4 calculates a reference pressure and a pulsation width of the anode pressure based on a stack load and sets an upper limit value and a lower limit value of the anode pressure. Then, the controller 4 periodically increases and decreases the anode pressure between the set upper and lower limit values of the anode pressure by periodically increasing and decreasing the anode pressure within the range of the pulsation width with the reference pressure as a center. Although a target output power of the fuel cell stack 2 calculated based on the operating state of the fuel cell system 1 is used as a representative example of the stack load in the present embodiment, an output current or an output voltage may be used without limitation to this.

When the anode pressure reaches the lower limit value at time t1, the pressure regulating valve 33 is opened at least up to such an opening that the anode pressure can be increased to the upper limit value as shown in FIG. 4(B). When in this state, the anode gas is supplied from the high-pressure tank 31 to the fuel cell stack 2 and discharged to the buffer tank 36.

When the anode pressure reaches the upper limit value at time t2, the pressure regulating valve 33 is fully closed as shown in FIG. 4(B) and the supply of the anode gas from the high-pressure tank 31 to the fuel cell stack 2 is stopped. Then, by the aforementioned electrode reaction (1), the anode gas remaining in the anode gas flow passages 121 in the fuel cell stack 2 is consumed with the passage of time. Thus, the anode pressure decreases by as much as the anode gas is consumed.

Further, if the anode gas remaining in the anode gas flow passages 121 is consumed, the pressure of the buffer tank 36 temporarily becomes higher than those of the anode gas flow passages 121. Thus, the anode off-gas reversely flows from the buffer tank 36 to the anode gas flow passages 121. As a result, the anode gas remaining in the anode gas flow passages 121 and that in the anode off-gas reversely flowed to the anode gas flow passages 121 are consumed with the passage of time and the anode pressure further decreases.

When the anode pressure reaches the lower limit value at time t3, the pressure regulating valve 33 is opened as at time t1. When the anode pressure reaches the upper limit value again at time t4, the pressure regulating valve 33 is fully closed.

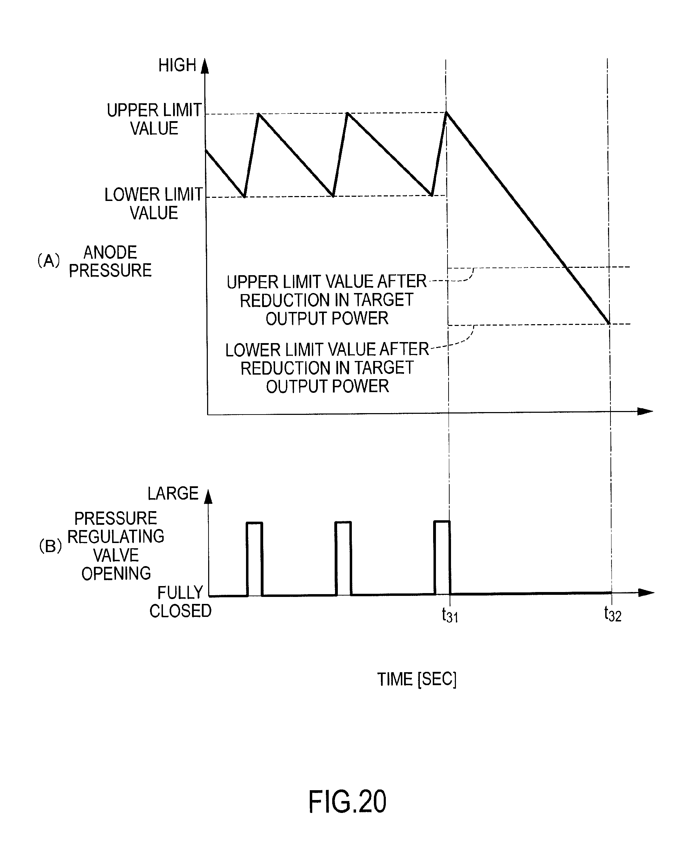

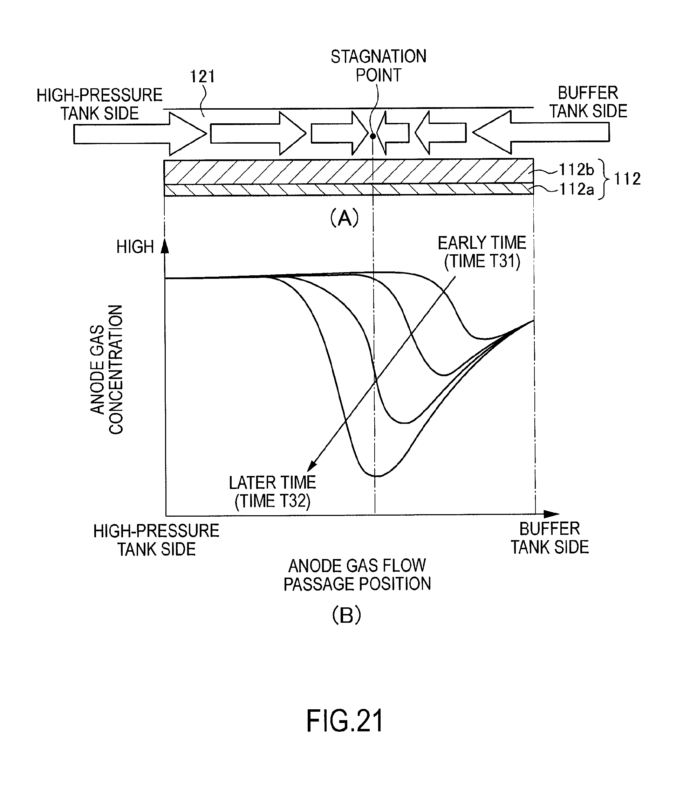

Here, a problem that an anode gas concentration becomes locally lower in some part than in other parts in the anode gas flow passages 121 during a down transient operation after the target output power (stack load) of the fuel cell stack decreases due to a change in the operating state of the fuel cell system has been found to occur in the case of performing such a pulsating operation. This problem is described below with reference to FIGS. 20 and 21.

FIGS. 20 are time charts showing a change of the anode pressure in the case of decreasing the anode pressure to the lower limit value by fully closing the pressure regulating valve 33 during the down transient operation.

When, for example, the accelerator operation amount decreases and the target output power of the fuel cell stack 2 decreases at time t31, the upper and lower limit values of the anode pressure corresponding to the reduced target output power are set as shown in FIG. 20(A).

At this time, if the pressure regulating valve 33 is fully closed at time t31 to decrease the anode pressure to the lower limit value (time t32) as shown in FIGS. 20(A) and 20(B), the anode gas concentration becomes locally lower in some part than in other parts in the anode gas flow passage 121. A reason for this is described with reference to FIG. 21.

FIGS. 21 are a diagram and a graph showing a reason for the generation of the part where the anode gas concentration becomes locally lower than in other parts in the anode gas flow passage 121. FIG. 21 (A) is a diagram showing the flows of the anode off-gas and the anode gas in the anode gas flow passage 121 when the pressure regulating valve 33 is fully closed during the down transient operation. FIG. 21(B) is a graph showing concentration distributions of the anode gas in the anode gas flow passage 121 according to the passage of time when the pressure regulating valve 33 is fully closed during the down transient operation.

When the pressure regulating valve 33 is fully closed as shown in FIG. 21 (A), the anode gas remaining in the anode gas flow passage 121 flows toward the buffer tank 36 due to a pressure difference produced by the consumption of the anode gas. If the anode gas remaining in the anode gas flow passage 121 is consumed, the pressure in the buffer tank 36 temporarily becomes higher than that in the anode gas flow passage 121. Thus, the anode off-gas reversely flows from the buffer tank 36 to the anode gas flow passage 121.

Then, a stagnation point where gas flow velocities of the anode gas and the anode off-gas become zero is generated at a joint part of the anode gas flowing toward the buffer tank 36 in the anode gas flow passage 121 and the anode off-gas reversely flowing from the buffer tank 36 to the anode gas flow passage 121.

If such a stagnation point is generated in the anode gas flow passage 121, nitrogen in the anode off-gas not used in the aforementioned electrode reaction (1) is accumulated near the stagnation point according to the passage of time. As a result, a nitrogen concentration near the stagnation point becomes higher than those at other points according to the passage of time and the anode gas concentration near the stagnation point becomes lower than those at other points according to the passage of time as shown in FIG. 21 (B).

As just described, during the down transient operation, the anode gas concentration near the stagnation point decreases as a time during which the pressure regulating valve 33 is fully closed becomes longer, i.e. a time necessary for the anode pressure to reach the lower limit value becomes longer. Then, the anode gas concentration becomes locally lower in some part than in other parts in the anode gas flow passage 121, and the aforementioned electrode reactions (1) and (2) may be hindered in that part so that the voltage becomes negative, which causes the deterioration of the fuel cell 10, if the anode gas concentration in that part (hereinafter, referred to as an "in-flow passage minimum anode gas concentration") falls below a predetermined concentration.

Accordingly, in the present embodiment, the opening of the purge valve 38 is made larger during the down transient operation than during the steady operation, thereby accelerating a decrease rate of the anode pressure during the down transient operation. This can shorten a time necessary for the anode pressure to reach the lower limit value during the down transient operation. As a result, it can be suppressed that the in-flow passage minimum anode gas concentration falls below the predetermined concentration, wherefore the deterioration of the fuel cell 10 can be suppressed.

A pulsating operation control according to the present embodiment is described below.

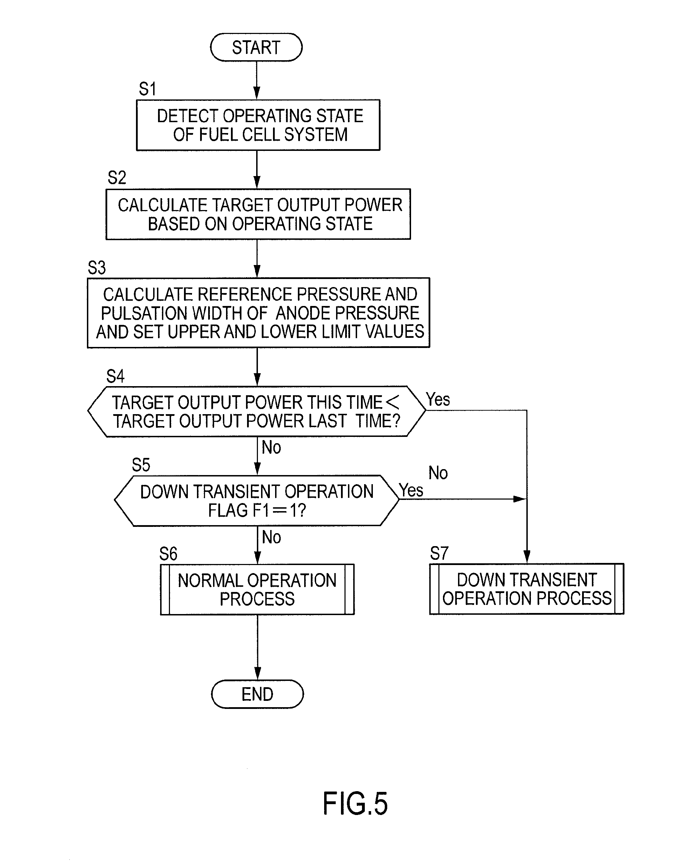

FIG. 5 is a flow chart showing the pulsating operation control according to the present embodiment. The controller 4 performs this routine in a predetermined operation cycle (e.g. 10 ms) during the operation of the fuel cell system 1.

In Step S1, the controller 4 reads detection values of the various sensors described above and detects the operating state of the fuel cell system 1.

In Step S2, the controller 4 calculates a target output power of the fuel cell stack 2 based on the operating state of the fuel cell system 1. The target output power is basically higher as the accelerator operation amount increases.

In Step S3, the controller 4 calculates the reference value and the pulsation width of the anode pressure in the case of the pulsating operation at the target output power based on the target output power of the fuel cell stack 2, and sets the upper and lower limit values of the anode pressure. The reference pressure and pulsation width of the anode pressure are larger as the target output power increases.

In Step S4, the controller 4 determines whether or not the target output power calculated this time is smaller than that calculated last time. The controller 4 performs a processing of Step S7 if the target output power calculated this time is smaller than that calculated last time while performing a processing of Step S5 unless otherwise.

In Step S5, the controller determines whether or not a down transient operation flag F1 is 1. The down transient operation flag F1 is a flag which is set at 1 until the anode pressure reaches the lower limit value during the down transient operation, and an initial value is set at 0. The controller performs the processing of Step S7 if the down transient flag F is 1 while performing a processing of Step S6 unless otherwise.

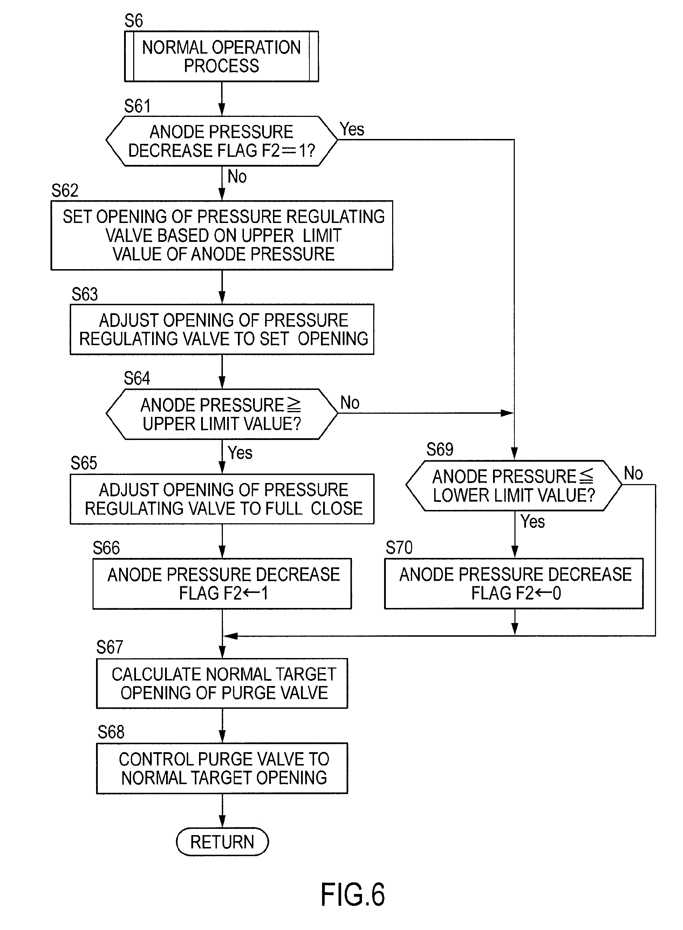

In Step S6, the controller performs a normal operation process. The normal operation process is described in detail later with reference to FIG. 6.

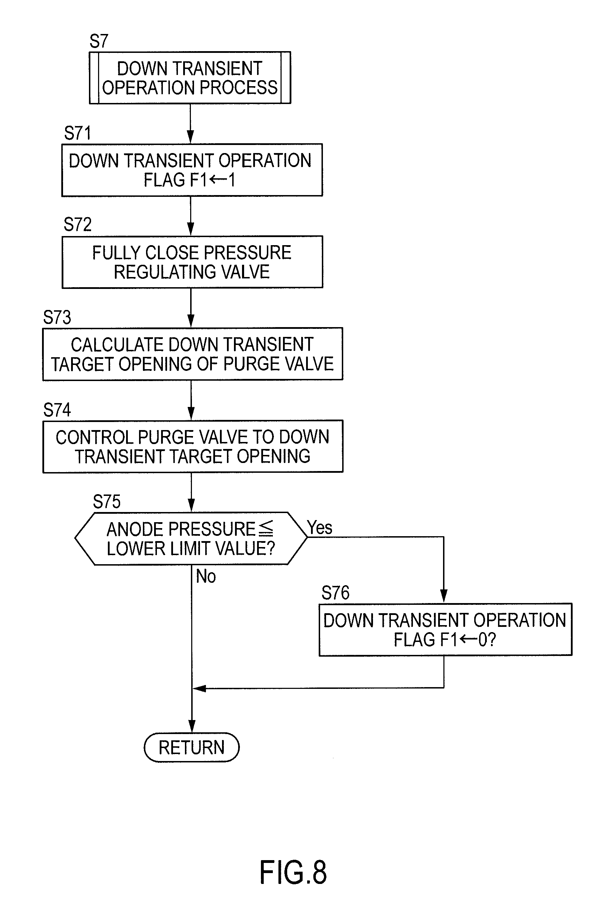

In Step S7, the controller performs a down transient operation process. The down transient operation process is described in detail later with reference to FIG. 8.

FIG. 6 is a flow chart showing the normal operation process.

In Step S61, the controller 4 determines whether or not an anode pressure decrease flag F2 is 1. The anode pressure decrease flag F2 is a flag whose initial value is 0 and which is set at 1 until the anode pressure falls to the lower limit value after reaching the upper limit value. The controller 4 performs a processing of Step S62 if the anode pressure decrease flag F2 is 0 while performing a processing of Step S67 if the anode pressure decrease flag F2 is 1.

In Step S62, the controller 4 sets such an opening of the pressure regulating valve 33 based on the upper limit value of the anode pressure that the anode pressure can be increased at least up to that upper limit value.

In Step S63, the controller 4 opens the pressure regulating valve 33 until having the opening set in Step S72.

In Step S64, the controller 4 determines whether or not the anode pressure has increased to or above the upper limit value. The controller 4 performs a processing of Step S65 if the anode pressure has increased to or above the upper limit value while performing the processing of Step S69 if the anode pressure is below the upper limit value.

In Step S65, the controller 4 fully closes the pressure regulating valve 33.

In Step S66, the controller 4 sets the anode pressure decrease flag F2 to 1.

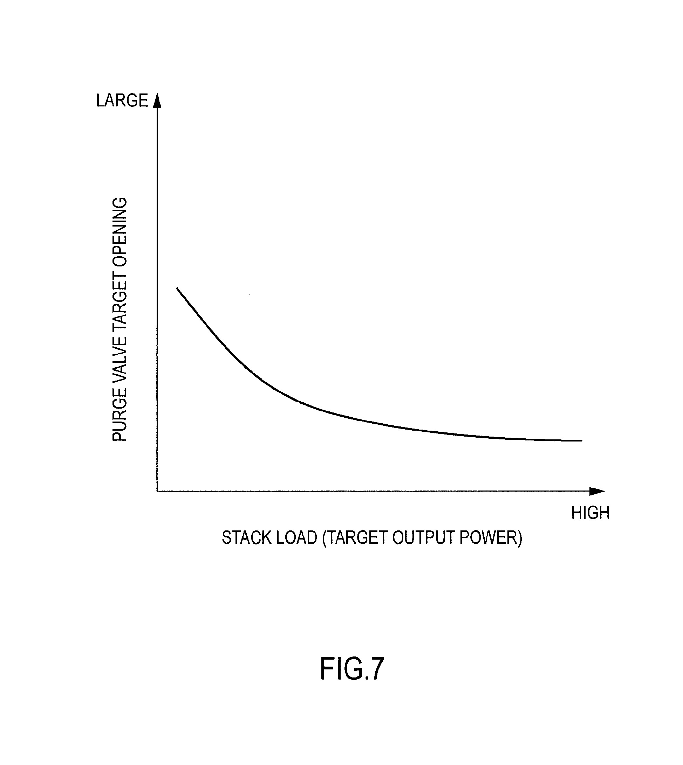

In Step S67, the controller calculates a target opening of the purge valve 38 during the normal operation (hereinafter, referred to as a "normal target opening") based on the stack load, i.e. the target output power of the fuel cell stack 2 by referring to a table of FIG. 7 to be described later.

In Step S68, the controller controls the opening of the purge valve 38 to the normal target opening.

In Step S69, the controller 4 determines whether or not the anode pressure has fallen to or below the lower limit value. The controller 4 performs a processing of Step S68 if the anode pressure has fallen to or below the lower limit value while finishing the process this time if the anode pressure is above the lower limit value.

In Step S70, the controller 4 sets the anode pressure decrease flag F2 to 0.

FIG. 7 is a table for calculating the normal target opening of the purge valve 38 based on the stack load, i.e. the target output power of the fuel cell stack 2. Here, after a basic way of thinking when the normal target opening of the purge valve 38 is set is first described, the table of FIG. 6 is described.

During the operation of the fuel cell system 1, nitrogen in the cathode gas permeates to the anode gas flow passages 121 via the electrolyte membrane. Accordingly, in a state where the purge valve 38 is fully closed, a nitrogen concentration in the buffer tank 36 gradually increases and, conversely, the anode gas concentration in the buffer tank 36 gradually decreases.

Here, since the amount of the anode gas consumed by the electrode reactions increases as the stack load increases, the anode gas concentration in the buffer tank 36 needs to be increased as the stack load increases.

Accordingly, in the present embodiment, the normal target opening of the purge valve 38 is so set that the amount of nitrogen discharged to the outside of the fuel cell system 1 increases as the stack load increases. That is, the normal target opening of the purge valve 38 is so set that the amount of the anode off-gas discharged from the buffer tank 36 to the outside of the fuel cell system 11 through the purge passage 37 increases as the stack load increases.

The normal target opening of the purge valve 38 decreases as the stack load increases in the table of FIG. 7. This is because the reference pressure of the anode pressure increases as the stack load increases and the amount of the anode off-gas discharged to the outside of the fuel cell system 1 increases even if the opening of the purge valve 38 is small.

As just described, in the present embodiment, the normal target opening of the purge valve 38 corresponding to the stack load is so set in advance by an experiment or the like that the anode gas concentration in the buffer tank reaches a desired concentration according to the stack load, and stored in the form of a table in the controller 4.

FIG. 8 is a flow chart showing the down transient operation process.

In Step S71, the controller 4 sets the down transient flag to 1.

In Step S72, the controller 4 fully closes the pressure regulating valve 33.

In Step S73, the controller 4 calculates a target opening of the purge valve 38 during the down transient operation (hereinafter, referred to as a "down transient target opening") based on the stack load, i.e. the target output power of the fuel cell stack 2 by referring to a table of FIG. 8 to be described later.

In Step S74, the controller 4 controls the opening of the purge valve 38 to attain the down transient target opening.

In Step S75, the controller 4 determines whether or not the anode pressure has reached the lower limit value. The controller 4 performs a processing of Step S76 if the anode pressure has reached the lower limit value while finishing the process this time unless otherwise.

In Step S76, the controller 4 sets the down transient operation flag F1 to 0.

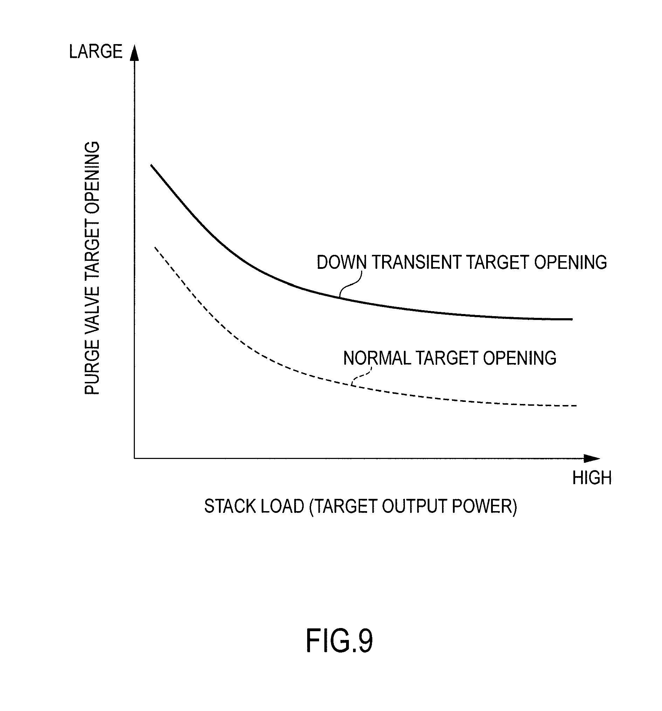

FIG. 9 is a table for setting the down transient target opening of the purge valve 38 based on the stack load, i.e. the target output power of the fuel cell stack 2. In FIG. 9, a solid line represents the down transient target opening of the purge valve 38 and a broken line represents the normal target opening of the purge valve 38.

As shown in FIG. 9, the down transient target opening of the purge valve 38 is set to be larger than the normal target opening.

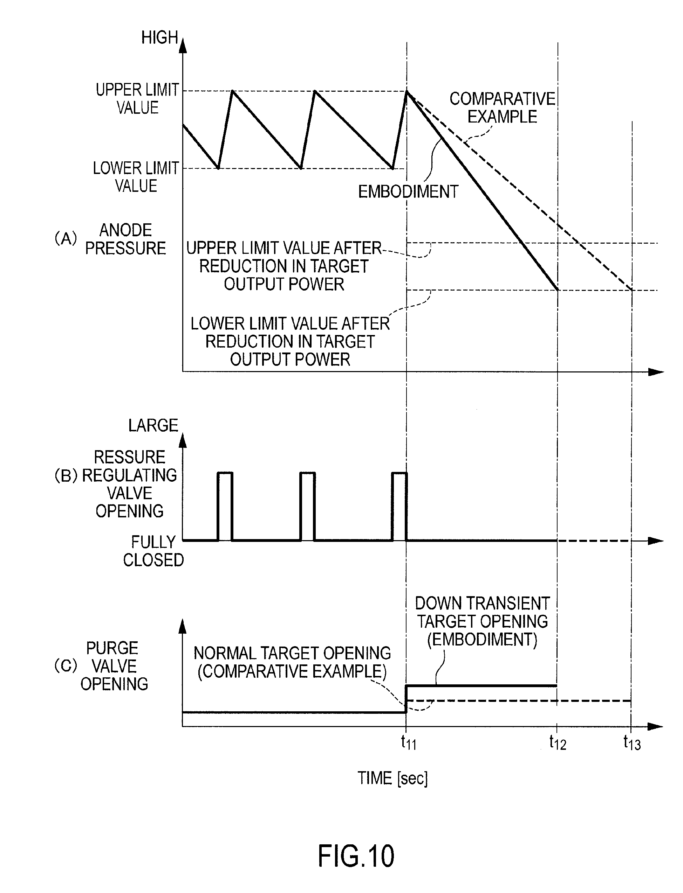

FIGS. 10 are time charts showing the operation of the pulsating operation control according to the present embodiment. In FIGS. 10, an operation in the case of setting the purge valve 38 at the normal target opening during the down transient operation is shown as a comparative example by broken line. In the following description, Step numbers of the flow chart are also written to clarify a correspondence with the flow chart.

When the operating state of the fuel cell system 1 changes and the target output power (stack load) of the fuel cell stack decreases at time t11, the reference pressure and the pulsation width of the anode pressure are calculated according to the decreased target output power and the upper and lower limit values of the anode pressure are set (FIG. 10(A); S3).

Further, due to a decrease in the target output power of the fuel cell stack, the down transient operation process is started (Yes in S4, S7), the pressure regulating valve 33 is controlled to be fully closed (FIG. 10(B); S72), and the purge valve 38 is set to the down transient target opening (FIG. 10(C); S73, S74).

At this time, since the down transient target opening is set to be larger than the normal target opening (FIG. 10(C)), a decrease rate of the anode pressure during the down transient operation can be more accelerated as compared with the case where the purge valve 38 is set at the normal target opening (FIG. 10(A)).

This can make a time necessary for the anode pressure to reach the lower limit value shorter than when the purge valve 38 is set at the normal target opening during the down transient operation.

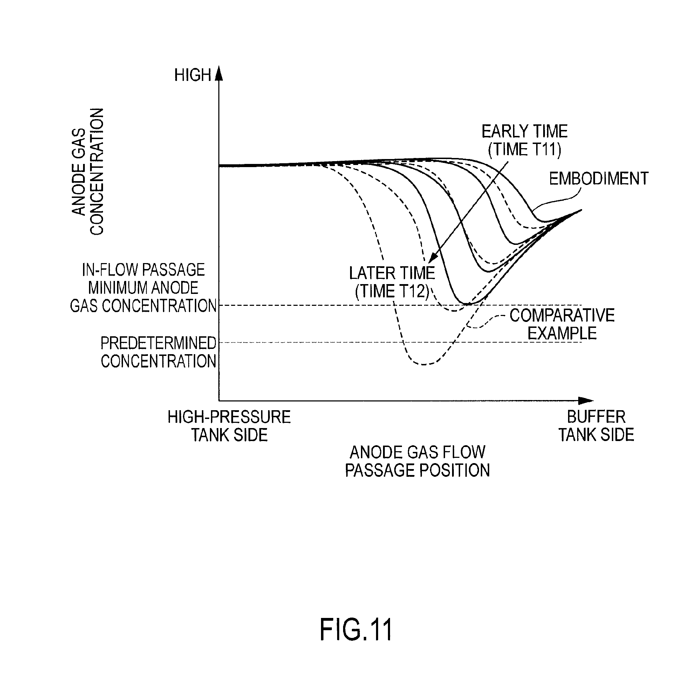

FIG. 11 is a graph showing an effect of the pulsating operation control according to the present embodiment.

In FIG. 11, solid lines represent concentration distributions of the anode gas in the anode gas flow passages 121 during the down transient operation according to the passage of time when the pulsating operation control according to the present embodiment is performed, i.e. the purge valve 38 is set at the down transient target opening during the down transient operation. On the other hand, broken lines represent concentration distributions of the anode gas in the anode gas flow passages 121 during the down transient operation according to the passage of time when the pulsating operation control according to the present embodiment is not performed, i.e. the purge valve 38 is set at the normal target opening during the down transient operation.

When the pulsating operation control according to the present embodiment is performed, the time necessary for the anode pressure to reach the lower limit value can be made shorter than when the purge valve 38 is set at the normal target opening during the down transient operation. Thus, as shown by the solid lines in FIG. 11, the fall of the in-flow passage minimum anode gas concentration below the predetermined concentration can be suppressed. Therefore, the deterioration of the fuel cell 10 can be suppressed and a reduction in power generation efficiency can be suppressed.

### (Second Embodiment)

Next, a second embodiment of the present invention is described. The present embodiment differs from the first embodiment in that the opening of the purge valve 38 is set to the down transient target opening after a pressure difference between the anode pressure before the down transient operation and that during the down transient operation becomes larger than a predetermined valve opening switching pressure. The following description is made, centering on points of difference. It should be noted that, in each of the following embodiments, components fulfilling functions similar to those of the first embodiment described above are denoted by the same reference signs and not repeatedly described.

When the opening of the purge valve 38 is set to the down transient target opening during the down transient operation, the amount of the anode off-gas discharged to the outside of the fuel cell system 1 increases. Since the anode off-gas contains unused anode gas not used in electrode reactions, fuel economy is deteriorated as the amount of the anode off-gas discharged to the outside of the fuel cell system 1 increases.

In the case of installing the fuel cell system 1 in a vehicle as in the present embodiment, an accelerator pedal may be depressed again before the anode pressure reaches the lower limit value during the down transient operation. That is, even if the opening of the purge valve 38 is set at the normal target opening, the accelerator pedal may be depressed to finish the down transient operation before the in-flow passage minimum anode gas concentration falls below the predetermined concentration.

If the opening of the purge valve 38 is set at the down transient target opening from the beginning in such a case, the amount of anode off-gas discharged to the outside of the fuel cell system 1 increases and fuel economy is deteriorated.

Accordingly, in the present embodiment, the opening of the purge valve 38 is set to the down transient target opening after a pressure difference ΔP between the anode pressure before the down transient operation and that during the down transient operation becomes larger than the predetermined valve opening switching pressure. That is, the opening of the purge valve 38 is set to the down transient target opening after the anode pressure decreases by the valve opening switching pressure during the down transient operation.

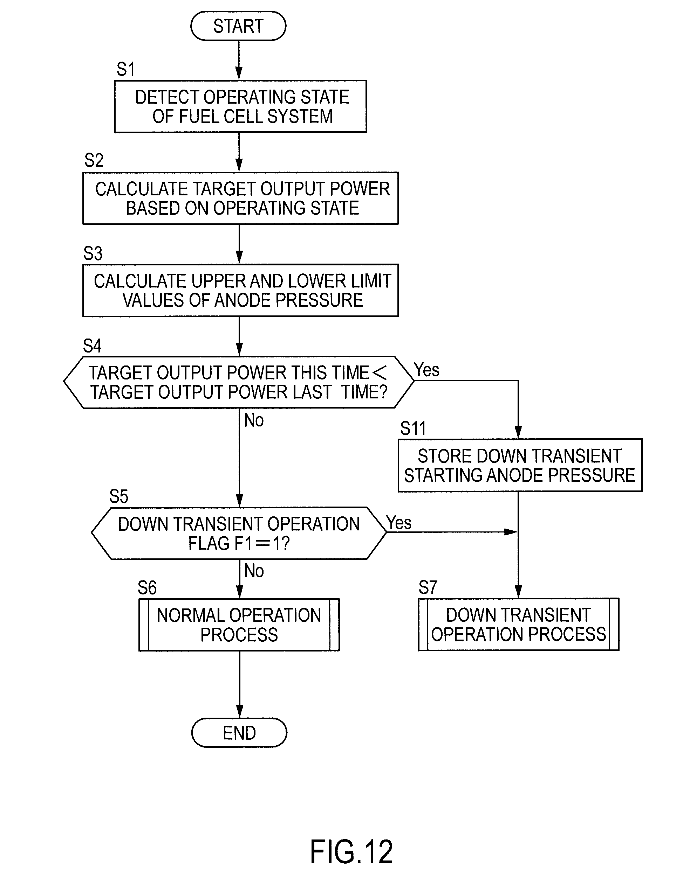

FIG. 12 is a flow chart showing a pulsating operation control according to the present embodiment. A controller 44 performs this routine in a predetermined operation cycle (e.g. 10 ms) during the operation of a fuel cell system 11. Processings of Steps S1 to S7 are not described here since being similar to those in the first embodiment.

In Step S 11, the controller 4 stores an anode pressure detected by a pressure sensor 34. The anode pressure stored in Step S11 is an anode pressure when the down transient operation is started. This anode pressure stored in Step S11 is referred to as a "down transient starting anode pressure" below.

FIG. 12 is a flow chart showing a down transient operation process according to the present embodiment. Processings of Steps S71 to S76 are not described here since being similar to those in the first embodiment.

In Step S101, the controller 4 calculates the pressure difference ΔP between the down transient starting anode pressure and the anode pressure during the down transient operation.

In Step S102, the controller 4 determines whether or not the pressure difference ΔP has become not smaller than the valve opening switching pressure. The controller 4 performs the processing of Step S73 if the pressure difference ΔP has become not smaller than the valve opening switching pressure while performing a processing of Step S103 if the pressure difference ΔP is smaller than the valve opening switching pressure.

In Step S103, the controller 4 calculates a normal target opening based on a stack load by referring to the aforementioned table of FIG. 7.

In Step S104, the controller 4 controls the opening of the purge valve 38 to the normal target opening.

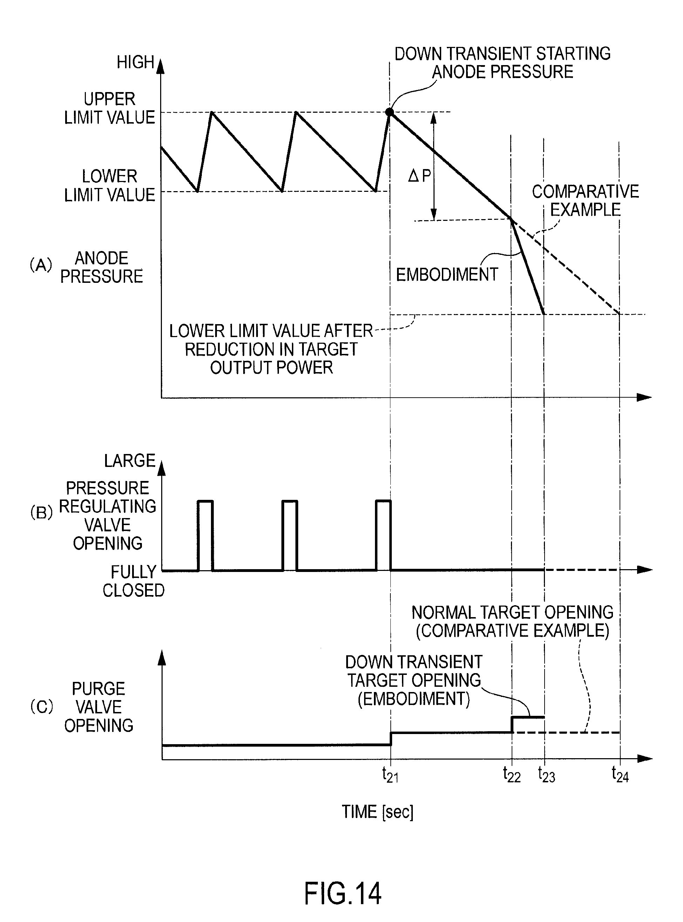

FIGS. 14 are time charts showing the operation of a pulsating operation control according to the present embodiment. In FIGS. 14, an operation in the case of setting the opening of the purge valve 38 to the normal target opening during the down transient operation is shown as a comparative example by broken line. In the following description, Step numbers of the flow chart are also written to clarify a correspondence with the flow chart.

When the operating state of the fuel cell system 1 changes and the target output power (stack load) of the fuel cell stack decreases at time t21, the reference pressure and the pulsation width of the anode pressure are calculated according to the decreased target output power and the upper and lower limit values of the anode pressure are set (FIG. 14(A); S3).

Further, due to a decrease in the target output power of the fuel cell stack, the down transient starting anode pressure is stored (Yes in S4, S11), the down transient operation process is started (S7), and the pressure regulating valve 33 is controlled to be fully closed (FIG. 14(B); S72).

At this time, in the present embodiment, the opening of the purge valve 38 is controlled to the normal target opening (FIG. 14(C); No in S102, S103, S104) until time t22 at which the pressure difference ΔP between the down transient starting anode pressure and the anode pressure during the down transient operation reaches the valve opening switching pressure (FIG. 14(A)). The opening of the purge valve 38 is controlled to the down transient target opening (FIG. 14(C); Yes in S102, S73, S74) after time t22 at which the pressure difference ΔP between the down transient starting anode pressure and the anode pressure during the down transient operation becomes not smaller than the valve opening switching pressure (FIG. 14(A)).

In this way, besides obtaining effects similar to those of the first embodiment, the deterioration of fuel economy can be suppressed since the amount of the unused anode gas discharged from the fuel cell system 1 during the down transient operation can be reduced.

### (Third Embodiment)

Next, a third embodiment of the present invention is described. The present embodiment differs from the second embodiment in that the valve opening switching pressure is increased as the stack load before the down transient operation increases. The following description is made, centering on points of difference.

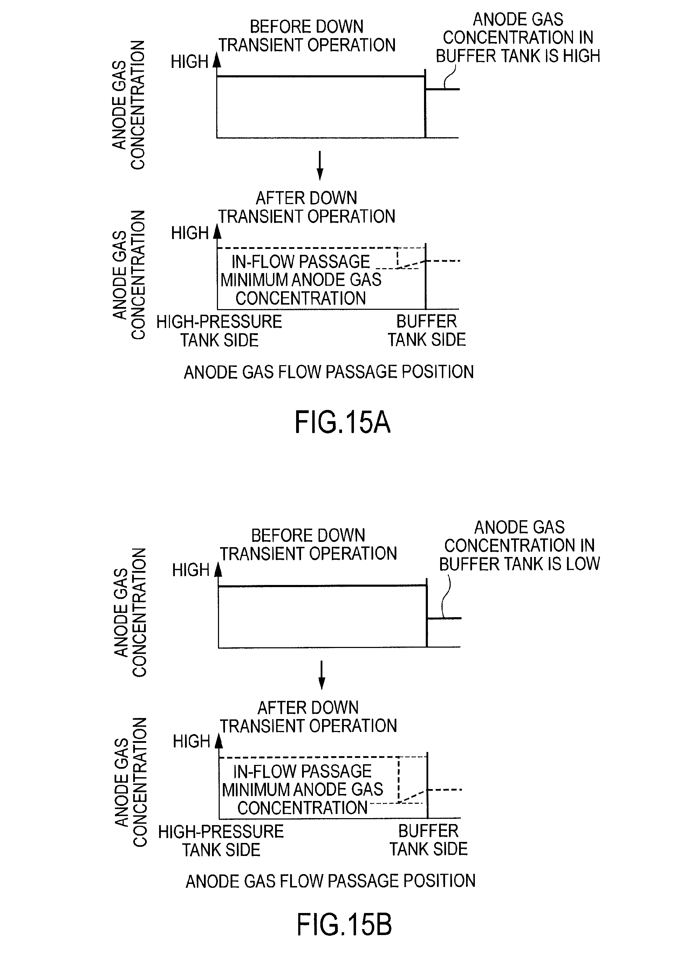

FIGS. 15A and 15B are graphs comparing concentration distributions of the anode gas in the anode gas flow passages 121 after the down transient operation in the case of performing the down transient operation for the same time according to the anode gas concentration in the buffer tank 36 before the down transient operation. FIG. 15A is a graph when the anode gas concentration in the buffer tank 36 before the down transient operation is high. FIG. 15B is a graph when the anode gas concentration in the buffer tank 36 before the down transient operation is low.

As described above, the anode gas concentration in the buffer tank 36 is controlled to increase as the stack load increases.

Here, in the case of performing the down transient operation for the same time as shown in FIGS. 15A and 15B, the in-flow passage minimum anode gas concentration decreases as the anode gas concentration in the buffer tank 36 before the start of the down transient operation decreases.

Accordingly, if the valve opening switching pressure is a fixed value as in the second embodiment, the in-flow passage anode gas concentration may fall below the predetermined concentration before the anode pressure reaches the lower limit value when the anode gas concentration in the buffer tank 36 before the down transient operation is low, i.e. when the stack load before the down transient operation is low.

Accordingly, in the present embodiment, the valve opening switching pressure is changed according to the stack load before the down transient operation. Specifically, the valve opening switching pressure is decreased as the stack load before the down transient operation decreases.

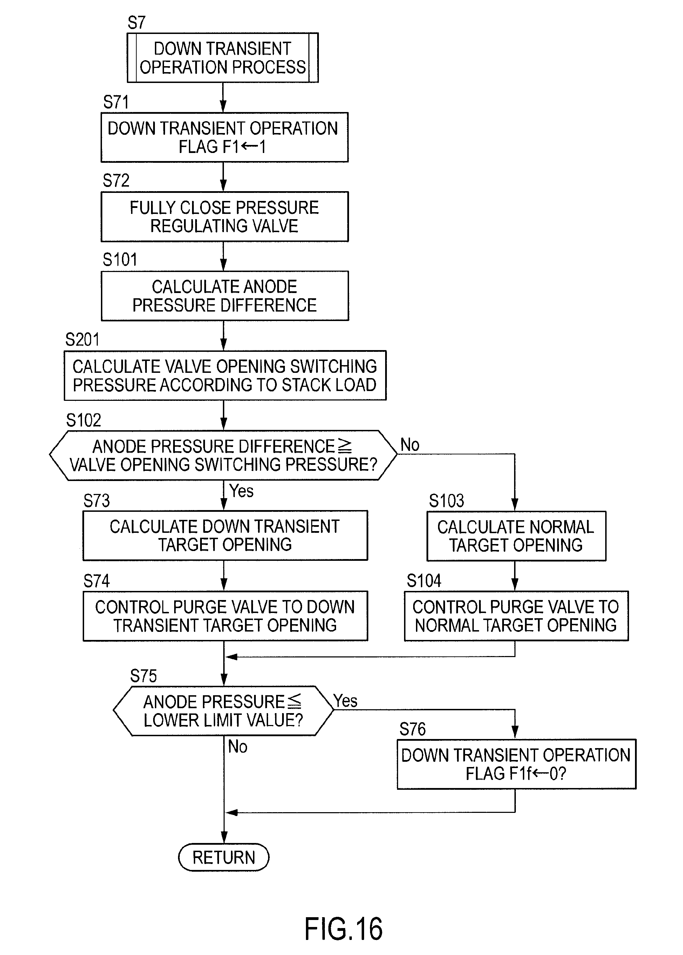

FIG. 16 is a flow chart showing a down transient operation process according to the present embodiment. Processings of Steps S71 to S76 and those of Steps S101 to S104 are not described here since being similar to those in the first and second embodiments.

In Step S201, the controller 4 sets the valve opening switching pressure according to the stack load. The valve opening switching pressure is set to decrease as the stack load decreases.

According to the present embodiment described above, the valve opening switching pressure is decreased as the stack load decreases. This can suppress the fall of the in-flow passage anode pressure below the predetermined concentration even if the opening of the purge valve 38 is set to the down transient target opening after the pressure difference ΔP between the down transient starting anode pressure and the anode pressure during the down transient operation becomes not smaller than the valve opening switching pressure. Therefore, the deterioration of the fuel cell stack can be more reliably suppressed while the deterioration of fuel economy is suppressed.

### (Fourth Embodiment)

Next, a fourth embodiment of the present invention is described. The present embodiment differs from the first embodiment in that the purge valve 38 is controlled to the down transient target opening for a given period even after the down transient operation is started and the anode pressure decreases to the lower limit value. The following description is made, centering on points of difference.

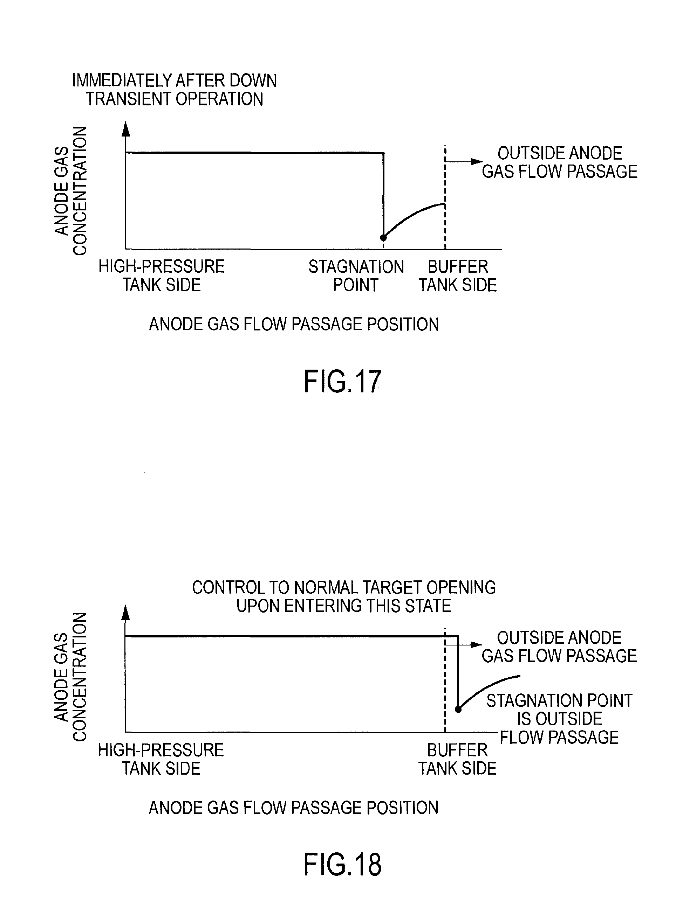

FIG. 17 is a graph showing the anode gas concentration in the anode gas flow passage immediately after the end of the down transient operation.

As shown in FIG. 17, immediately after the end of the down transient operation, the anode gas concentration becomes locally lower at the stagnation point in the anode gas flow passage 121 than those at other points. In this state, the pulsating operation is performed within a range between the upper and lower limit values of the anode pressure set according to the target output power.

Here, if the opening of the purge valve 38 is returned to the normal target opening and the pulsating operation is performed in a state where the anode gas concentration is locally lower in some part than in other parts in the anode gas flow passage 121, the pulsating operation may be performed with the stagnation point remaining in the anode gas flow passage 121. Then, there is a possibility of deteriorating the fuel cell and reducing power generation performance.

Accordingly, in the present embodiment, the opening of the purge valve 38 is kept at the down transient target opening until the stagnation point exits from the anode gas flow passage due to the pulsating operation after the down transient operation is finished as shown in FIG. 18.

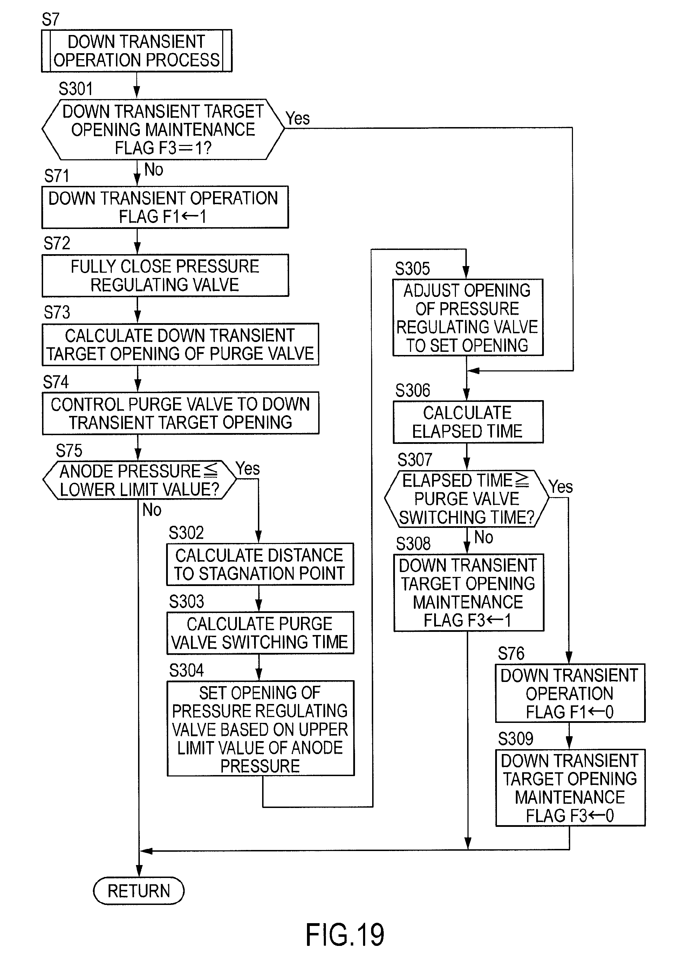

FIG. 19 is a flow chart showing a down transient operation process according to the present embodiment.

In Step S301, the controller 4 determines whether or not a down transient target opening maintenance flag F3 is set at 1. The down transient target opening maintenance flag F3 is a flag whose initial value is 0 and which is set at 1 until the opening of the purge valve 38 is returned to the normal target opening after the down transient operation is finished, i.e. after the anode pressure falls to or below the lower limit value. The controller 4 performs a processing of Step S306 if the down transient target opening maintenance flag is set at 1 while performing a processing of Step S71 if the down transient target opening maintenance flag is set at 0.

In Step S302, the controller 4 estimates the position of the stagnation point in the anode gas flow passage and calculates a distance to the stagnation point based on a decrease width of the target output power of the fuel cell stack. The distance to the stagnation point is a distance from the exit side (buffer tank 36 side) of the anode gas flow passage to the position of the stagnation point. The larger the decrease width of the target output power of the fuel cell stack, the longer the period of the down transient operation, thus, the longer the distance to the stagnation point.

In Step S303, the controller 4 calculates a time necessary for the position of the stagnation point to exit from the anode gas flow passage (hereinafter, referred to as a "purge valve switching time") based on the distance to the stagnation point and the target output power of the fuel cell stack. The purge valve switching time increases as the distance to the stagnation point increases. Further, the smaller the target output power of the fuel cell stack, the weaker a force for pushing the anode gas into the buffer tank 36 while the anode pressure is increased during the pulsating operation, thus, the longer the purge valve switching time.

In Step S304, the controller 4 sets the opening of the pressure regulating valve 33 based on the upper limit value of the anode pressure so that the anode pressure can be increased at least up to the upper limit value.

In Step S305, the controller 4 opens the pressure regulating valve 33 to such an opening set in Step S304.

In Step S306, the controller 4 calculates an elapsed time after the anode pressure fell to or below the lower limit value. Specifically, an elapsed time this time is set by adding the operation cycle to the elapsed time up to the last time.

In Step S307, the controller 4 determines whether or not the elapsed time after the anode pressure fell to or below the lower limit value has become equal to or longer than the purge valve switching time. The controller 4 performs a processing of Step S76 if the elapsed time after the anode pressure fell to or below the lower limit value has become equal to or longer than the purge valve switching time while performing a processing of Step S308 unless otherwise.

In Step S308, the controller 4 sets the down transient target opening maintenance flag F3 to 1.

In Step S309, the controller 4 sets the down transient target opening maintenance flag F3 to 0.

According to the present embodiment described above, the opening of the purge valve 38 is maintained at the down transient target opening until the position of the stagnation point exits from the anode gas flow passage due to the pulsating operation after the down transient operation is finished.

This can suppress the execution of the pulsating operation with the state where the anode gas concentration is locally lower in some part than in other parts in the anode gas flow passage kept. Thus, it is possible to suppress the deterioration of the fuel cell and the deterioration of power generation performance.

Although the embodiments of the present invention have been described above, the above embodiments are only an illustration of some application examples of the present invention and not intended to limit the technical scope of the present invention to the specific configurations of the above embodiments.

For example, although the buffer tank 36 is intentionally provided downstream of the fuel cell stack 2 in each of the above embodiments, such a component is not always necessary and a normal pipe or an internal manifold of the fuel cell stack 2 may be regarded as a buffer tank.

Further, although the down transient target opening is set to be uniformly larger than the normal target opening by the predetermined opening in the above first embodiment, a change can be made stepwise from the normal target opening to the down transient target opening according to the anode pressure during the down transient operation. That is, the discharge amount of the anode off-gas may be increased with a decrease in the anode pressure during the down transient operation.

This is because, when the anode pressure is high, the anode gas concentration in the buffer tank 36 is also high and, thus, a possibility that the in-flow passage minimum anode gas concentration falls below the predetermined concentration even if the opening of the purge valve 38 is small is low. Since this can reduce the amount of anode off-gas discharged to the outside of the fuel cell system 1, fuel economy can be improved.

Further, in the above second embodiment, the valve opening switching pressure may be decreased as the stack load after the down transient operation increases. This is because, if the stack load after the down transient operation is high, the pressure difference between the down transient starting anode pressure and the lower limit value of the anode pressure after the down transient operation may become smaller than the valve opening switching pressure and the opening of the purge valve 38 may not be changed to the down transient target opening during the down transient operation.

Further, in the above third embodiment, the valve opening switching pressure is changed according to the stack load on the premise that the opening of the purge valve 38 is so controlled that the anode gas concentration in the buffer tank 36 reaches the desired concentration according to the stack load. However, a hydrogen concentration in the buffer tank 36 may be detected or estimated and the valve opening switching pressure may be increased as the anode gas concentration in the buffer tank 36 increases.

In the case of detecting the anode gas concentration in the buffer tank 36, a concentration sensor may be attached to the buffer tank 36.

In the case of estimating the anode gas concentration in the buffer tank 36, the anode gas concentration in the buffer tank 36 may be estimated by integrating an amount obtained by subtracting the amount of nitrogen discharged to the outside of the fuel cell system 1 from the amount of nitrogen permeating from the cathode side to the anode side. The amount of nitrogen permeating from the cathode side to the anode side changes according to a permeation coefficient of the electrolyte membrane and a partial pressure difference between a nitrogen partial pressure in the cathode gas and that in the anode gas.

Here, the permeation coefficient of the electrolyte membrane is a physical property value determined by the material and thickness of the electrolyte membrane and changes according to the stack temperature. Accordingly, the permeation coefficient of the electrolyte membrane can be calculated according to the stack temperature by obtaining the permeation coefficient of the electrolyte membrane according to the stack temperature by an experiment or the like in advance and storing it as a map in the controller 4. The permeation coefficient of the electrolyte membrane increases as the stack temperature increases.

On the other hand, the partial pressure difference between the nitrogen partial pressure in the cathode gas and that in the anode gas can be calculated by increasing the nitrogen partial pressure in the anode gas according to the amount of permeated nitrogen with an initial value of the nitrogen partial pressure in the cathode gas set, for example, at 76 [kPa] and that of the nitrogen partial pressure in the anode gas set at 0 [kPa].

Further, in the above embodiments, a local reduction in the hydrogen concentration in the anode gas flow passages during the down transient operation is suppressed by increasing the opening of the purge valve 38 set according to a power generation state during the down transient operation.

Contrary to this, the following control may be executed if a purge control is executed utilizing an on/off purge valve 38.

First, the amount of impurities (mainly nitrogen) entering from the cathode side to the anode side via the MEA 11 is estimated. The amount of impurities depends on a power generation current and the humidity of the MEA 11 (internal impedance of the fuel cell).

Subsequently, a valve opening time of the purge valve 38 necessary to discharge the estimated amount of impurities is set.

The purge valve 38 is opened every predetermined time (e.g. 5 sec), and impurities are discharged and the hydrogen concentration in the buffer tank is maintained at a predetermined control concentration by changing a ratio of the valve opening time of the purge valve 38 to the predetermined time.

Here, when the down transient operation is started, the supply of hydrogen by the pressure regulating valve 33 is stopped since the target anode pressure decreases. On the other hand, the consumption of hydrogen in the anode gas flow passages by power generation continues and the purge valve 38 is opened to discharge a purge flow rate according to the amount of power generation. However, since a hydrogen consumption rate in the anode gas flow passages is faster than an anode off-gas discharge rate by the purge valve 38, the impurities in the buffer tank reversely flow toward the anode gas flow passages, thereby locally reducing the hydrogen concentration in the anode gas flow passages.

Accordingly, when the down transient operation is started, the purge valve 38 is opened for a time longer than the valve opening time of the purge valve 38 for discharging the amount of impurities calculated according to the power generation current and the humidity of the MEA 11. More optimally, an adjustment is preferably made so that a local reduction in the hydrogen concentration in the anode gas flow passages does not fall below the predetermined concentration even if a reverse flow is generated. The predetermined concentration is determined from the deterioration of a catalyst allowable in view of a product life even if the down transient operation is repeatedly performed.

This application claims a priority of Japanese Patent Application No. 2011-288517 filed with the Japan Patent Office on December 28, 2011, all the contents of which are hereby incorporated by reference.

## Claims

1. A fuel cell system configured to generate power by supplying anode gas and cathode gas to a fuel cell, comprising:
a control valve configured to control a pressure of the anode gas to be supplied to the fuel cell;
a buffer unit configured to store anode off-gas to be discharged from the fuel cell;
a purge valve configured to adjust a flow rate of the anode off-gas discharged from the buffer unit;
a pulsating operation unit configured to increase and vary the pressure of the anode gas downstream of the control valve according to a load of the fuel cell; and
a purge unit configured to control an opening of the purge valve according to the load of the fuel cell;
wherein the purge unit increases the opening of the purge valve controlled according to the load of the fuel cell during a down transient operation in which the load of the fuel cell decreases.

2. The fuel cell system according to claim 1, wherein:
the purge unit increases the opening of the purge valve controlled according to the load of the fuel cell when a pressure difference between the pressure of the anode gas during a steady operation before the down transient operation and that of the anode gas during the down transient operation becomes not smaller than a predetermined pressure.

3. The fuel cell system according to claim 2, wherein:
the purge unit controls an opening amount of the purge valve such that a concentration of the anode gas in the buffer unit increases as the load of the fuel cell increases, and increases the predetermined pressure as the load of the fuel cell during the steady operation before the down transient operation increases.

4. The fuel cell system according to claim 2, further comprising a unit configured to detect or estimate a concentration of the anode gas in the buffer unit;
wherein the purge unit increases the predetermined pressure as the anode gas concentration in the buffer unit increases.

5. The fuel cell system according to claim 2, wherein:
the purge unit decreases the predetermined pressure as the load of the fuel cell after the down transient operation increases.

6. The fuel cell system according to any one of claims 1 to 5, wherein:
the purge unit increases the opening of the purge valve controlled according to the load of the fuel cell as the pressure of the anode gas during the down transient operation decreases.

7. The fuel cell system according to any one of claims 1 to 6, wherein:
the purge unit increases the opening of the purge valve controlled according to the load of the fuel cell until a stagnation point generated in an anode gas flow passage of the fuel cell during the down transient operation exits from the anode gas flow passage after the down transient operation is finished.

8. A fuel cell system configured to generate power by supplying anode gas and cathode gas to a fuel cell, comprising:
a control valve configured to control a pressure of the anode gas to be supplied to the fuel cell;
a buffer unit configured to store anode off-gas to be discharged from the fuel cell;
a purge valve configured to discharge the anode off-gas in the buffer unit;
a pulsating operation unit configured to increase and vary the pressure of the anode gas downstream of the control valve according to a load of the fuel cell;
a purge flow rate calculation unit configured to calculate a purge flow rate based on the load of the fuel cell; and
a purge unit configured to change a valve opening time of the purge valve based on the purge flow rate;
wherein the purge flow rate calculation unit increases the purge flow rate during a down transient operation in which the load of the fuel cell decreases.
